# EUROPEAN PATENT SPECIFICATION

(11) **EP 0 434 633 B1**
(45) Date of publication and mention of the grant of the patent: **14.09.1994**
(21) Application number: 90830519.6
(22) Date of filing: 13.11.1990
(51) Int. Cl.: G01N 3/56, G01N 19/04

(54) **A method for checking the characteristics of coating layers, particularly layers of paint on metals**
Verfahren zur Prüfung von Deckschichteigenschaften, insbesondere von Farbschichten auf Metallen
Méthode pour le contrôle des caractéristiques de couches de revement, en particulièrement de couches de peinture sur des métaux

(30) Priority: 20.12.1989 IT 6814089
(43) Date of publication of application: 26.06.1991
(73) Proprietor: FIAT AUTO S.p.A., 10135 Torino (IT)
(72) Inventor: Iulita, Piero, I-10137 Torino (IT)
(74) Representative: Bosotti, Luciano

(56) References cited:
- THIN-SOLID FILMS, vol. 137, no. 1, March 1986, pages 65-77, Elsevier Sequoia,Lausanne, CH; B. JÖNSSON et al."Evaluation of hard coatings on steel byparticle erosion"
- AUTOMOTIVE INDUSTRIES, vol. 136, no. 1, 1st January 1967, pages 73-74; E.A.PETRI: "Adhesion testing of automotive paint"
- PATENT ABSTRACTS OF JAPAN, vol. 13, no. 471 (P-949)[3819], 25th October 1989;& JP-A-01 185 430
- IEEE TRANSACTIONS ON PATTERN ANALYSIS AND MACHINE INTELLIGENCE, VOL. PAMI-5, NO.6, NOVEMBER 1983, pages 573-583; R.W. CONNERS ET AL: "Identifying and Locating Surface Defects in Wood: Part of an Automated Lumber Processing System".

## Description

The present invention relates in general to the problem of checking the adhesion characteristics of a coating layer (for example, enamel) on a substrate constituted, for example, by a metal.

This problem occurs very frequently in the automotive industry in relation to the need to check that the bodywork parts of a motor vehicle are painted correctly and that the layer of paint will not flake or peel because of inadequate adhesion to the substrate.

This checking is currently carried subjectively by persons employed for the purpose, who scratch the parts which are to be checked for the effectiveness of the adhesion of their layer of paint, or bombard them with gravel or the like, and then check whether and to what extent the layer of paint has stood up to the test, drawing subjective conclusions as to the effectiveness of the adhesion of the layer of paint.

In an attempt to give a certain quality of objectivity to this check, a test (so-called "checkering") has already been proposed in which the layer of paint is scratched in two perpendicular directions so as to form a grid defining many small squares in the layer of paint. An adhesive tape is stuck to the part used as a sample for the test. The tape is then removed, taking with it areas of paint from any regions where the adhesion of the layer of paint to the substrate is inadequate.

The number and distribution of the areas in which the paint is removed as a result of the removal of the adhesive tape may provide indications as to the quality of the adhesion of the layer of paint.

Tests of this type are described in JP-A-01 185 430 (Toshiba Corp.), 25 July 1989, and in "Automotive Industries", Vol. 136, No. 1, 1 January 1967, pages 73-74; "Adhesion testing of automotive paint".

It is also known from IEEE Transactions of pattern analysis and machine intelligence, Vol. PAMI-5, No. 6, November 1983, pages 573-583; Conners et al.: "Identifying and locating surface defects in wood: part of an automated lumber processing system" to subject a surface of wood to image analysis in order to check the geometrical characteristics of the surface.

There is, however, still a need to provide criteria which enable the results of the tests described above to be completely objective.

According to the present invention, this object is achieved by virtue of a method having the characteristics recited in the claims which follow.

The invention will now be described, with reference to the appended drawings, in which:
Figure 1 is a schematic, general sectional view of a test being carried out by the method according to the invention, and
Figure 2 illustrates schematically the structure of the device for carrying out the method of the invention.

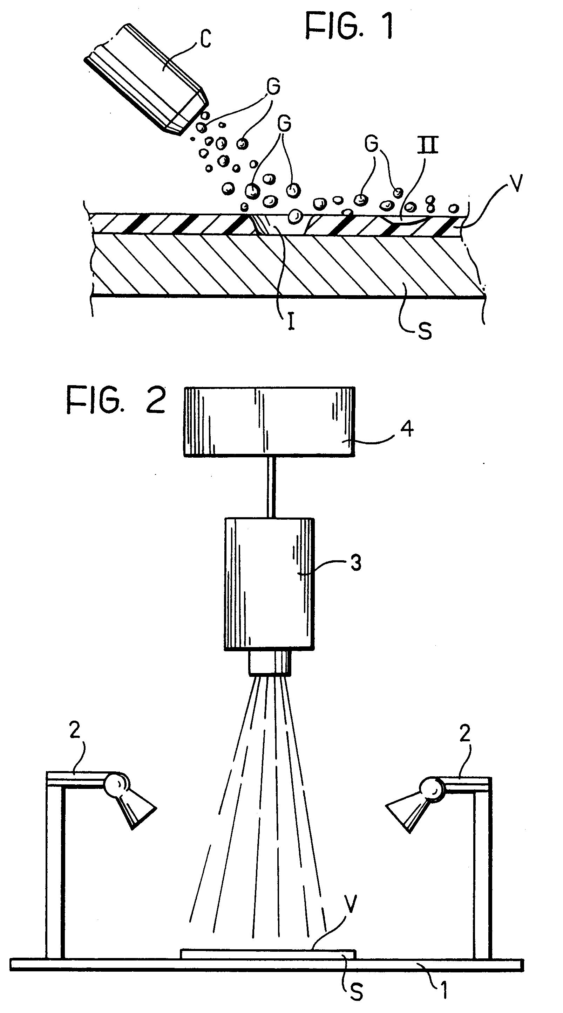

In Figure 1, a substrate, typically a piece of sheet metal, indicated S, is covered on one of its opposite faces by a layer of paint (enamel) V whose adhesion to the substrate S is to be tested.

In a first (known) step of the method according to the invention, the layer of paint V is subjected to a test.

For this purpose, the sample used for the test may be bombarded with gravel G ("stone chippings") projected, for example, from a pneumatic gun at a speed and a distance from the surface of the layer of paint V which can be varied selectively in dependence on the degree of severity to be given to the test.

By striking the layer of paint V violently, the pieces of gravel G may remove flakes of paint V where the adhesion of the layer of paint V to the substrate S is inadequate, as shown schematically at I in Figure 1.

Alternatively, for example, when the layer of paint V is not homogeneous, the bombardment of gravel G does not detach the paint completely from the substrate S but causes the formation of a scratch II of a greater or lesser depth in the surface of the layer of paint V.

As a possible alternative, the wear action may be carried out in two stages, that is to say:
- longitudinal and transverse scratching carried out (by known means and criteria) in two perpendicular directions so as to form a grid with a corresponding array of small squares in the layer of paint V, and
- the application to the grid of an adhesive tape which is subsequently removed and, where the adhesion of the layer of paint V to the substrate S is inadequate, can remove, or only partially remove, one or more squares of paint, establishing practically the same situation as that illustrated in Figure 1.

At this point, the painted part of the surface of the portion of the substrate used as a sample has a surface morphology in which larger or smaller regions of greater or lesser depth, where the paint V has been removed or broken, can be recognised in the generally flat, smooth surface of the layer of paint V. These parts appear generally opaque and, in any case, can be distinguished optically from the rest of the layer of paint V. The substrate S is then placed on a surface 1 illuminated by lamps 2, preferably arranged so as to prevent the formation of shadows on the substrate S (which need not even be flat), so that an image thereof can be created by a video camera 3.

This is preferably a high-definition video camera which can output a digital video signal (indicative of the surface morphology of the sample of substrate S) for supply to an image analyser 4.

From the video signal supplied by the video camera 3, this device (which is of known type: for example, it may be an image analyser sold under the trade name of IBAS by the company KONTRON) can carry out a quantitative analysis to determine the exact percentage or total area of paint which has been removed, even only partially, by the tests previously carried out on the substrate S.

These parameters (which the image analyser 4 processes according to known criteria and programs which do not need to be described in detail herein) provide a precise and completely objective indication of the extent of the surface areas of paint V which have been damaged and hence an equally objective indication of the effectiveness of the adhesion of the paint V to the substrate S.

## Claims

1. A method for checking the characteristics of a layer of paint (V) applied to a sheet of metal (S), including the step of:
- subjecting the layer of paint (V) to a wear (C, G) so as to cause the at least partial detachment (I, II) of the layer of paint (V) from the sheet of metal (S) where adhesion is inadequate, and the consequent formation in the layer of paint (V) of a substantially two-dimensional morphology with surface regions (I, II) which, as a result of the detachment of the layer of paint (V), have optical characteristics distinct from the rest of the layer of paint (V),
characterised in that it furthermore comprises the step of:
- subjecting the substantially two-dimensional morphology to image analysis (3, 4) in order to check the geometrical characteristics of the surface regions, the geometrical characteristics being indicative of the characteristics of the adhesion of the layer of paint to the sheet of metal (S).

2. A method according to Claim 1, characterised in that the image analysis is intended to detect at least one of the total area and the percentage area of the extent of the said surface regions.

3. A method according to Claim 1 or Claim 2, characterised in that the layer of paint (V) is subjected to wear by bombardment with gravel (C, G).

## Patentansprüche

1. Verfahren zum Prüfen der Eigenschaften einer auf einem Metallblech (S) aufgebrachten Farbschicht (V) umfassend den Schritt:
- Unterziehen der Farbschicht (V) einer Abnutzung (C, G), um die wenigstens teilweise Ablösung (I, II) der Farbschicht (V) von dem Metallblech (S) dort zu bewirken, wo die Adhäsion unzulänglich ist, und die entsprechende Ausbildung in der Farbschicht (V) einer im wesentlichen zweidimensionalen Morphologie mit Oberflächenbereichen (I, II) zu bewirken, welche in Folge des Ablösens der Farbschicht (V) sich von der übrigen Farbschicht (V) unterscheidende optische Eigenschaften aufweisen,
dadurch gekennzeichnet, daß es ferner den Schritt umfaßt:
- Unterziehen der im wesentlichen zweidimensionalen Morphologie einer Bildanalyse (3, 4), um die geometrischen Eigenschaften der Oberflächenbereiche zu prüfen, wobei die geometrischen Eigenschaften die Adhäsionseigenschaften der Farbschicht an dem Metallblech (S) anzeigen.

2. Verfahren nach Anspruch 1, dadurch gekennzeichnet, daß die Bildanalyse dazu bestimmt ist, die Gesamtfläche und/oder die prozentuale Fläche des Ausmaßes der Oberflächenbereiche zu erfassen.

3. Verfahren nach Anspruch 1 oder Anspruch 2, dadurch gekennzeichnet, daß die Farbschicht (V) einer Abnutzung durch Beschießen mit Sand (C, G) unterzogen wird.

## Revendications

1. Procédé de vérification des caractéristiques d'une couche de peinture (V) appliquée sur une feuille métallique (S), incluant :
la soumission de la couche de peinture (V) à une usure (C, G) de manière à provoquer le détachement au moins partiel (I, II) de la couche de peinture (V) de la feuille métallique (S) à l'endroit où l'adhérence est inadéquate et la formation par conséquent dans la couche de peinture (V) d'une morphologie sensiblement en deux dimensions présentant des régions de surface (I, II) qui, en tant que résultat du détachement de la couche de peinture (V), présentent des caractéristiques optiques distinctes du reste de la couche de peinture (V),
caractérisé en ce qu'il comprend en outre l'étape de :
soumission de la morphologie sensiblement en deux dimensions à une analyse d'image (3, 4) afin de vérifier les caractéristiques géométriques des régions de surface, les caractéristiques géométriques étant indicatives des caractéristiques d'adhérence de la couche de peinture sur la feuille métallique (S).

2. Procédé selon la revendication 1, caractérisé en ce que l'analyse d'image est destinée à détecter au moins un élément pris parmi l'aire totale et l'aire en pourcentage de l'étendue desdites régions de surface.

3. Procédé selon la revendication 1 ou 2, caractérisé en ce que la couche de peinture (V) est soumise à une usure au moyen d'un bombardement de gravier (C, G).
